# EUROPEAN PATENT SPECIFICATION

(11) **EP 1 898 130 B1**
(45) Date of publication and mention of the grant of the patent: **09.12.2009**
(21) Application number: 07253488.6
(22) Date of filing: 03.09.2007
(51) Int. Cl.: F16H 61/16

(54) **Control apparatus for a vehicle, a method of controlling a vehicle and a program that implements this method**
Vorrichtung und Verfahren zur Fahrzeugsteuerung und ein mit dem Verfahren in Zusammenhang stehendes Programm
Appareil et procédé de contrôle pour un véhicule et un programme correspondant

(30) Priority: 11.09.2006 JP 2006245675
(43) Date of publication of application: 12.03.2008
(73) Proprietor: Toyota Jidosha Kabushiki Kaisha, Aichi-ken Toyota-shi 471-8571 (JP)
(72) Inventor: Ayabe, Atsushi, Toyota-chi Aichi-ken 471-8571 (JP)
(74) Representative: Albutt, Anthony John

(56) References cited:
- JP-A- 11 351 000
- JP-A- 2003 239 779
- JP-A- 2004 293 371

## Description

### BACKGROUND OF THE INVENTION

### 1. Field of the Invention

The invention relates to a technology for controlling an automatic transmission provided in a vehicle. More specifically, the invention relates to a gear-shift control in a vehicle that includes a vehicle-speed restriction device that controls a power source to restrict a vehicle speed.

### 2. Description of the Related Art

Conventionally, a vehicle that includes a vehicle-speed restriction apparatus is available. The vehicle-speed restriction apparatus restricts a vehicle speed so that the vehicle speed does not exceed a predetermined target vehicle speed, by reducing an engine speed and the amount of injected fuel. In such a vehicle, when the vehicle speed is restricted during the downshift of an automatic transmission, it is difficult to increase the engine speed to synchronize the engine speed with a synchronous speed (i.e., a speed calculated by multiplying the rotational speed of the output shaft of the automatic transmission by a reduction gear ratio of a target gear to which the automatic transmission should downshift). This makes it difficult to complete the gear change. Finally, the automatic transmission shifts to a target gear when the engine speed has not yet been synchronized with the synchronous speed. This causes a shift shock. For example, Japanese Patent Application Publication No. 2003-239779 (JP-A-2003-239779) describes a technology for solving such a problem.

The vehicle-speed control apparatus described in JP-A-2003-239779 includes vehicle-speed restriction, gear-ratio change determination means, and vehicle-speed restriction stop means. The vehicle-speed restriction restricts a vehicle speed so that the vehicle speed does not exceed a predetermined target limit speed, by restricting an engine speed or the amount of injected fuel. The gear-ratio change determination means determines whether the gear ratio (reduction gear ratio) of a power transmission system changes. When the gear-ratio change determination means determines that the gear ratio changes, the vehicle-speed restriction stop means stops the vehicle-speed restriction means from restricting the vehicle speed.

In the vehicle-speed control apparatus described in JP-A-2003-239779, when a driver starts a shift operation for the power transmission system, and accordingly the gear ratio of the power transmission system changes, the gear-ratio change determination means determines that the gear ratio of the power transmission system changes. When the gear-ratio change determination means determines that the gear ratio of the power transmission system changes, the vehicle-speed restriction stop means stops the vehicle-speed restriction means from restricting the vehicle speed. Thus, when it is determined that the gear ratio of the power transmission system changes during the period in which the vehicle speed is restricted, the restriction of the vehicle speed is stopped. This makes it possible to increase the engine speed during the gear shift. As a result, the driver smoothly performs the shift operation (for example, the operation for downshift or kickdown).

However, in the vehicle-speed control apparatus described in the above publication, when a downshift (for example, a downshift from a sixth gear to a fifth gear) is being executed, a condition for executing another downshift (for example, a downshift from a fifth gear to a fourth gear) is satisfied, and following the downshift, the other downshift (for example, a downshift from a fifth gear to a fourth gear) is executed, for example, due to the driving operation performed by the driver, the restriction of the vehicle speed continues to be stopped. This increases the period during which the vehicle speed is not restricted. As a result, the vehicle speed may exceed the target limit speed.

JP 2004-293371 discloses a vehicle speed limiting device arranged to temporarily cancel vehicle speed limits during gear shifting.

JP 11351000 discloses a vehicle speed controller arranged to prevent a driver from intentionally releasing a vehicle speed limitation whilst matching engine speed.

### SUMMARY OF THE INVENTION

The invention provides a control apparatus for a vehicle that includes an automatic transmission and a method of controlling the vehicle, which enables a smooth gear shift, and prevents the vehicle speed from exceeding a target vehicle speed, and a program that implements the method, and a storage medium comprising that program.

According to claim 1, a control apparatus controls a vehicle that includes a power source and an automatic transmission that is connected to the output shaft of the power source. The control apparatus includes vehicle speed detection means for detecting a speed of the vehicle; vehicle-speed restriction means for executing a vehicle-speed restriction control in the power source to restrict the speed of the vehicle; downshift-execution condition determining means for determining whether a condition for executing a downshift of the automatic transmission is satisfied; downshift progress determining means for determining the progress of the downshift; restriction prohibition means for prohibiting the vehicle-speed restriction means from executing the vehicle speed restriction control, if a predetermined condition relating to the vehicle speed is satisfied during the downshift; and gear-shift prohibition means for prohibiting a second downshift from being executed after a first downshift if the restriction prohibition means prohibits the vehicle-speed restriction means from executing the vehicle speed restriction control. A method of controlling a vehicle according to claim 4 includes the same requirements as those of the control apparatus according to claim 1.

According to claim 1 and claim 4, the vehicle-speed restriction means executes the vehicle speed restriction control in the power source by, for example, decreasing the amount of fuel injected to the engine so that the speed of the vehicle does not exceed the target vehicle speed. If the predetermined condition relating to the vehicle speed (for example, the condition that the vehicle speed exceeds a threshold speed that is lower than the target limit speed by a predetermined value) is satisfied during the downshift, the vehicle-speed restriction means is prohibited from executing the control. That is, during the downshift, a higher priority is given to increasing the rotational speed of the power source to smoothly complete the downshift, than to restricting the vehicle speed. Following a downshift, a subsequent downshift may be executed due to an operation performed by a driver. If the vehicle-speed restriction means is prohibited from executing the vehicle speed restriction control, and the subsequent downshift is executed, the period during which the restriction of the vehicle speed is prohibited is excessively increased. As a result, the vehicle speed may exceed the target limit speed. Accordingly, when the vehicle-speed restriction means is prohibited from executing the vehicle speed restriction control, the execution of a second downshift, following the first down shift, is prohibited. Thus, when the first downshift is completed, the second downshift is not executed. This makes it possible for the vehicle-speed restriction means to start the vehicle speed restriction control. Thus, it is possible to prevent an excessive increase in the period during which the restriction of the vehicle speed is prohibited. Accordingly, the vehicle speed is prevented from exceeding the target limit speed. As a result, it is possible to provide the control apparatus for the vehicle that includes an automatic transmission, and the method of controlling the vehicle, which enable a smooth gear shift, and prevent the vehicle speed from exceeding the target limit speed.

In the control apparatus for the vehicle according to claim 2, in addition to the configuration according to claim 1, the gear-shift prohibition means prohibits execution of the second downshift after the first downshift if a condition for executing the second downshift is satisfied during a period from when a condition for executing the first downshift is satisfied, until when the first downshift is completed. The method of controlling the vehicle according to claim 5 includes the same requirement as that of the control apparatus according to claim 2.

According to claim 2 or claim 5, for example, when the condition for executing the second downshift is satisfied due to an operation performed by the driver before a control to execute the first downshift starts, the second downshift is prohibited.

In the control apparatus for the vehicle according to claim 3, in addition to the configuration according to claim 1 or claim 2, the gear-shift prohibition means prohibits the second downshift, when the restriction prohibition means prohibits the vehicle-speed restriction means from executing the vehicle speed restriction control at the time of completion of the first downshift. The method of controlling the vehicle according to claim 3 includes the same requirement as that of the control apparatus according to the third aspect.

According to the claim 3 or claim 6, the gear-shift prohibition means prohibits execution of the second downshift after the first downshift if the vehicle-speed restriction means is prohibited from executing the vehicle speed restriction control by the restriction prohibition means when the first downshift is completed.

A program according to claim 7 is a program that makes a computer execute the method according to any one of claims 4 to 6. A storage medium according to claim 8 is a storage medium comprising a program according to claim 7.

According to claim 7 or claim 8, the method according to any one of claim 4 to 6 is executed using a general-purpose computer.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic configuration diagram showing a powertrain controlled by an ECU, which is a control apparatus according to an embodiment of the invention;
FIG. 2 is a diagram showing conditions for executing gear shifts in an automatic transmission of a vehicle provided with the control apparatus according to the embodiment of the invention;
FIG. 3 is a skeleton diagram showing a gear train in the automatic transmission of the vehicle provided with the control apparatus according to the embodiment of the invention;
FIG. 4 is an operation table for the automatic transmission of the vehicle provided with the control apparatus according to the invention;
FIG. 5 is a diagram of function blocks of the ECU, which constitutes the control apparatus according to the embodiment of the invention;
FIG. 6 is a first flowchart showing the control structure of a program executed by the ECU;
FIG. 7 is a second flowchart showing the control structure of a program executed by the ECU;
FIG. 8 is a diagram showing the case where the conditions for executing gear shifts in the automatic transmission are satisfied in the vehicle provided with the control apparatus according to the embodiment of the invention; and
FIG. 9 is a timing chart showing a vehicle speed when a control is executed by the ECU.

### DETAILED DESCRIPTION OF THE INVENTION

Hereinafter, an embodiment of the invention will be described with reference to the drawings. In the following description, the same and corresponding components are denoted by the same reference numerals, and have the same names and the same functions. Therefore, the detailed description thereof will not be repeated.

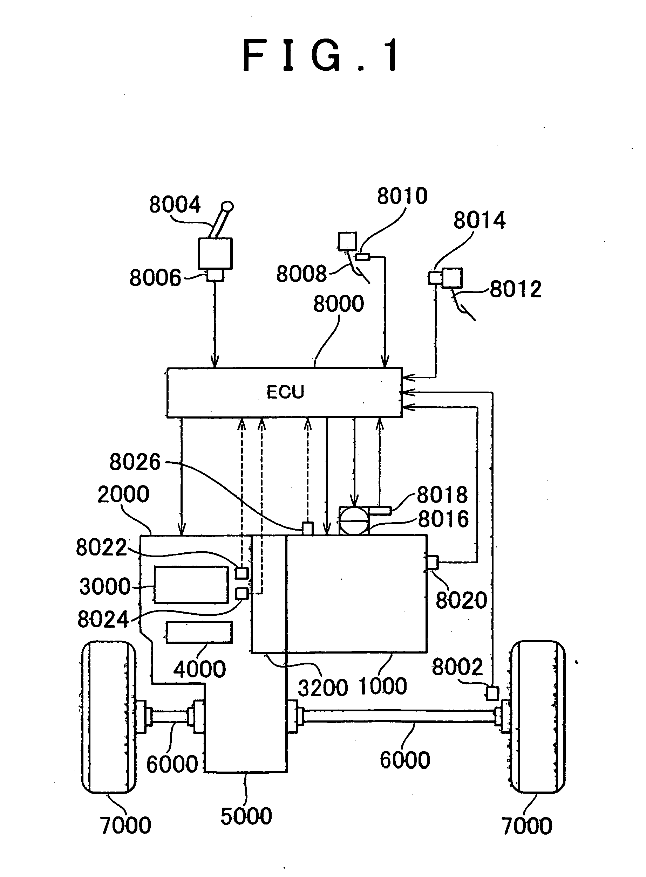

A vehicle provided with a control apparatus according to the embodiment of the invention will be described with reference to FIG. 1. The vehicle is a front-engine front-drive vehicle that includes a stepped automatic transmission with six speeds. The vehicle in which the control apparatus according to the invention may be employed is not limited to a specific vehicle. That is, the control apparatus may be employed in any vehicle that includes an automatic transmission. For example, the control apparatus may be employed in a vehicle other than the front-engine front-drive vehicle, a vehicle that includes a stepped transmission other than the stepped transmission with six speeds, or a vehicle that includes a continuously variable transmission.

The vehicle includes an engine 1000, an automatic transmission with six speeds 2000; a planetary gear unit 3000, which constitutes a part of the automatic transmission 2000; a hydraulic circuit 4000, which constitutes a part of the automatic transmission 2000; a differential gear 5000; a drive shaft 6000; front wheels 7000; and an ECU (Electronic Control Unit) 8000.

The engine 1000 is an internal combustion engine in which mixture of air and fuel injected from an injector (not shown) is burned in the combustion chamber of each cylinder. A piston is pushed down in the cylinder by combustion, and thus a crankshaft is rotated.

The automatic transmission 2000 is connected to the engine 1000 via a torque converter 3200. When the automatic transmission 2000 shifts to a desired gear, the rotational speed of the crankshaft input to the automatic transmission 2000 changes to the desired rotational speed.

The output gear of the automatic transmission 2000 engages with the differential gear 5000. The differential gear 5000 is connected to a drive shaft 6000, for example, using a spline. Power is transmitted to the front right and front left wheels 7000 via the drive shaft 6000.

The ECU 8000 is connected to a vehicle-speed sensor 8002, a position switch 8006 for a shift lever 8004, an accelerator-pedal operation degree sensor 8010 for an accelerator pedal 8008, a stroke sensor 8014 for a brake pedal 8012, a throttle-valve opening degree sensor 8018 for an electronic throttle valve 8016, an engine speed sensor 8020, an input-shaft rotational speed sensor 8022, an output-shaft rotational speed sensor 8024, and a coolant-temperature sensor 8026, for example, via harness.

The vehicle-speed sensor 8002 detects a vehicle speed V based on the rotational speed of the drive shaft 6000, and transmits a signal that indicates the detected vehicle speed to the ECU 8000. The position switch 8006 detects the position of the shift lever 8004, and transmits a signal that indicates the detected shift lever position to the ECU 8000. The automatic transmission 2000 automatically is shifted to a gear according to the position of the shift lever 8004.

The accelerator-pedal operation degree sensor 8010 detects the operation amount of the accelerator pedal 8008 (hereinafter, referred to as "accelerator-pedal operation degree"), and transmits a signal that indicates detected accelerator-pedal operation degree to the ECU 8000.

The stroke sensor 8014 detects the stroke amount of the brake pedal 8012, and transmits a signal that indicates the detected stroke amount to the ECU 8000.

The throttle-valve opening degree sensor 8018 detects the opening degree of the electronic throttle valve 8016, and transmits a signal that indicates the detected opening degree to the ECU 8000. The opening degree of the electronic throttle valve 8016 is adjusted by an actuator.

The electronic throttle valve 8016 adjusts the amount of air taken into the engine 1000 (i.e., output from the engine 1000).

The engine speed sensor 8020 detects the rotational speed NE of the output shaft (crankshaft) of the engine 1000 (i.e., the engine speed NE), and transmits a signal that indicates the detected engine speed NE to the ECU 8000.

The input-shaft rotational speed sensor 8022 detects the rotational speed NIN of the input shaft of the automatic transmission 2000 (i.e., the rotational speed NT of the turbine of the torque converter 3200), and transmits a signal that indicates the detected input shaft speed to the ECU 8000. Hereinafter, the rotational speed NIN will be referred to as "input-shaft rotational speed NIN".

The output-shaft rotational speed sensor 8024 detects the rotational speed NOUT of the output shaft of the automatic transmission 2000, and transmits a signal that indicates the detected output shaft speed to the ECU 8000. Hereinafter, the rotational speed NOUT will be referred to as "output-shaft rotational speed NOUT".

The coolant-temperature sensor 8026 detects the temperature of coolant for the engine 1000 (hereinafter, referred to as "coolant temperature"), and transmits a signal that indicates the detected coolant temperature to the ECU 8000.

The ECU 8000 controls devices so that the vehicle moves in a desired state (so that the automatic transmission 2000 operates in a desired operating state), based on the signals transmitted from the vehicle-speed sensor 8002, position switch 8006, accelerator-pedal operation degree sensor 8010, stroke sensor 8014, throttle-valve opening degree sensor 8018, engine speed sensor 8020, input-shaft rotational speed sensor 8022, output-shaft rotational speed sensor 8024, coolant-temperature sensor 8026, and the like, and maps and programs stored in the ROM (Read Only Memory).

In this embodiment, the ECU 8000 controls the amount of fuel injected from the injector (hereinafter, referred to as "fuel injection amount") and a period during which the fuel is injected, based on the engine speed NE detected by the engine speed sensor 8020, the accelerator-pedal operation degree ACC detected by the accelerator-pedal operation degree sensor 8010, the temperature of the coolant for the engine 1000 detected by the coolant-temperature sensor 8026, and the like.

Further, when the shift lever 8004 is in the D position (Drive), the ECU 8000 controls the automatic transmission 2000 so that the automatic transmission 2000 shifts to one of the first to sixth gears. When the automatic transmission 2000 shifts to one of the first to sixth gears, the automatic transmission 2000 transmits driving force to the front wheels 7000. In the D position, the automatic transmission 2000 may shift to at least one higher gear than the sixth gear. That is, for example, the automatic transmission 2000 may shift to a seventh gear or an eighth gear.

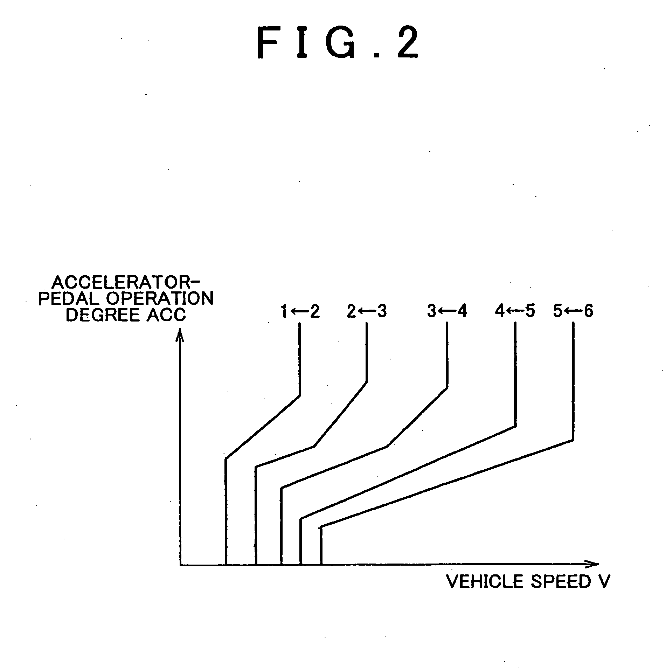

A gear to which the automatic transmission 2000 should shift is determined based on a shift diagram that is made in advance, as shown in FIG. 2. In the shift diagram, the vehicle speed V and accelerator-pedal operation degree ACC are used as parameters. FIG. 2 shows only shift lines that are employed when the automatic transmission 2000 downshifts. The transmission may upshift or downshift according to the operation of the shift lever 8004 operated by the driver, in addition to upshifting or downshifting in accordance with the shift diagram.

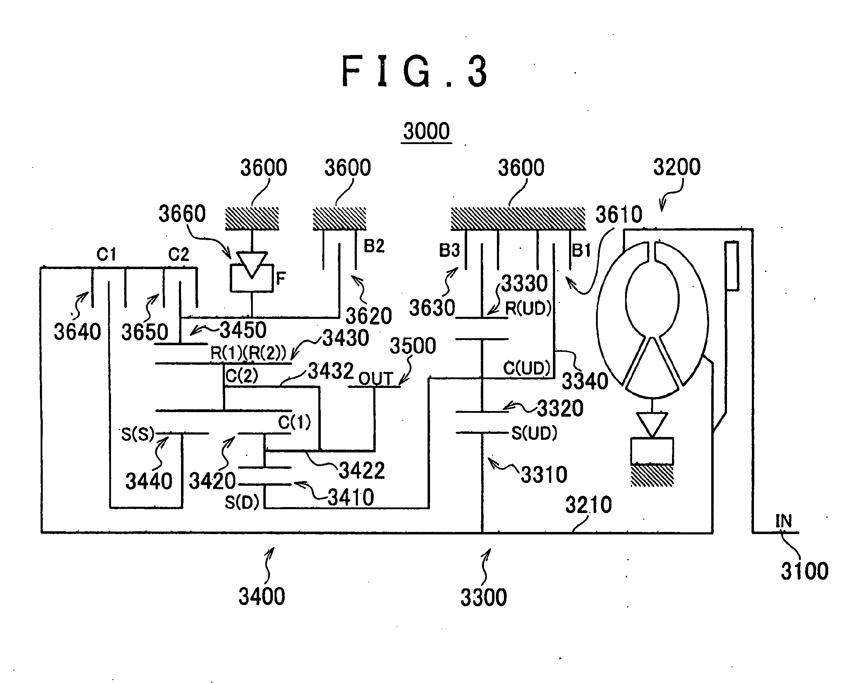

The planetary gear unit 3000 will be described with reference to FIG. 3. The planetary gear unit 3000 is connected to the torque converter 3200 that includes the input shaft 3100 connected to the crankshaft. The planetary gear unit 3000 includes a first planetary gear set 3300, a second planetary gear set 3400, an output gear 3500, a B 1 brake 3610, a B2 brake 3620, and a B3 brake 3630, a C1 clutch 3640 and a C2 clutch 3650, and a one-way clutch F3660. The B 1 brake 3610, B2 brake 3620, and B3 brake 3630 are fixed to the gear case 3600.

The first planetary gear set 3300 is a single pinion type planetary gear mechanism. The first planetary gear set 3300 includes a sun gear S (UD) 3310, a pinion 3320, a ring gear R (UD) 3330, and a carrier C (UD) 3340.

The sun gear S (UD) 3310 is connected to the output shaft 3210 of the torque converter 3200. The pinion 3320 is rotatably supported by the carrier C (UD) 3340. The pinion 3320 engages with the sun gear S (UD) 3310 and ring gear R (UD) 3330.

The ring gear R (UD) 3330 is fixed to the gear case 3600 by the B3 brake 3630. The carrier C (UD) 3340 is fixed to the gear case 3600 by the B 1 brake 3610.

The second planetary gear set 3400 is a Ravigneaux type planetary gear mechanism. The second planetary gear set 3400 includes a sun gear S (D) 3410, a short pinion 3420, a carrier C (1) 3422, a long pinion 3430, a carrier C (2) 3432, a sun gear S (S) 3440, and a ring gear R (1) (R (2)) 3450.

The sun gear S (D) 3410 is connected to the carrier C (UD) 3340. The short pinion 3420 is rotatably supported by the carrier C (1) 3422. The short pinion 3420 engages with the sun gear S (D) 3410, and long pinion 3430. The carrier C (1) 3422 is connected to the output gear 3500.

The long pinion 3430 is rotatably supported by the carrier C (2) 3432. The long pinion 3430 engages with the short pinion 3420, sun gear S (S) 3440, and ring gear R (1) (R (2)) 3450. The carrier C (2) 3432 is connected to the output gear 3500.

The sun gear S (S) 3440 is connected to the output shaft 3210 of the torque converter 3200 by the C1 clutch 3640. The ring gear R (1) (R (2)) 3450 is fixed to the gear case 3600 by the B2 brake 3620, and connected to the output shaft 3210 of the torque converter 3200 by the C2 clutch 3650. The ring gear R (1) (R (2)) 3450 is connected to the one-way clutch F3660. When the engine drives the wheels in the first gear, the ring gear R (1) (R (2)) 3450 is prevented from rotating.

The one-way clutch F3660 is provided in parallel with the B2 brake 3620. That is, the outer race of the one-way clutch F3660 is fixed to the gear case 3600. The inner race of the one-way clutch F3660 is connected to the ring gear R (1) (R (2)) 3450 via a rotation shaft.

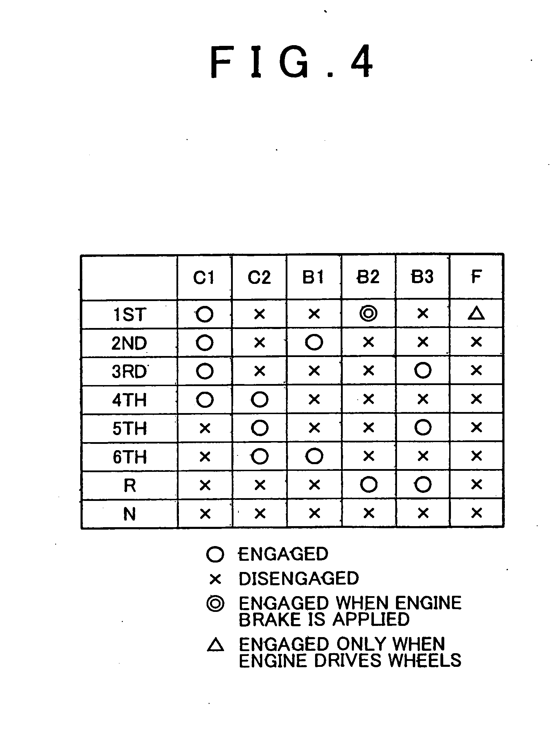

FIG. 4 is an operation table that shows the relation between the gears and the operating states of the clutches and brakes. Circles indicate the engaged state. Cross marks indicate the disengaged state. Double circles indicate the engaged state only when an engine brake is applied. Triangles indicate the engaged state only when the engine drives the wheels. By operating the brakes and clutches as shown in the operation table, the automatic transmission 2000 is shifted to one of the first gear to the sixth gear, and a reverse gear. When the hydraulic circuit 4000 controls the engagement pressure for the clutches and brakes, the clutches and brakes are operated.

The ECU 8000 outputs a gear-shift command to the hydraulic circuit 4000 for operating the clutches and brakes, based on the gear determined based on the current vehicle speed V, the accelerator-pedal operation degree ACC, and the shift diagram (refer to FIG. 2), and the combination of the operating state of the clutches and brakes indicated by the operation table in FIG. 4.

For example, when the automatic transmission 2000 downshifts from the sixth gear to the fifth gear, the ECU 8000 outputs the gear-shift command to decrease the engagement pressure for the B1 brake 3610 to disengage the B1 brake 3610. When the input-shaft rotational speed NIN is synchronized with a synchronous rotational speed (i.e., a rotational speed calculated by multiplying the output-shaft rotational speed NOUT by the reduction gear ratio of the fifth gear to which the automatic transmission 2000 should downshift), the ECU 8000 outputs the gear-shift command to increase the engagement pressure for the B3 brake 3630 to engage the B3 brake 3630. Thus, the gear shift is completed. This reduces a shift shock when the B3 brake 3630 is engaged. In the embodiment, the phrase "the input-shaft rotational speed NIN is synchronized with the synchronous rotational speed" signifies that the difference between the input-shaft rotational speed NIN and the synchronous rotational speed is smaller than a predetermined value.

When it is determined that the automatic transmission 2000 should shift to a plurality of gears, the ECU 8000 outputs the gear-shift commands so that the automatic transmission 2000 shifts to plurality of gears sequentially. That is, after the gear-shift command is output, the ECU 8000 determines whether a gear shift to a gear indicated by the output gear-shift command is completed. When the ECU 8000 determines that the gear shift is completed, the ECU 8000 outputs the gear-shift command to execute the subsequent gear shift to the next gear.

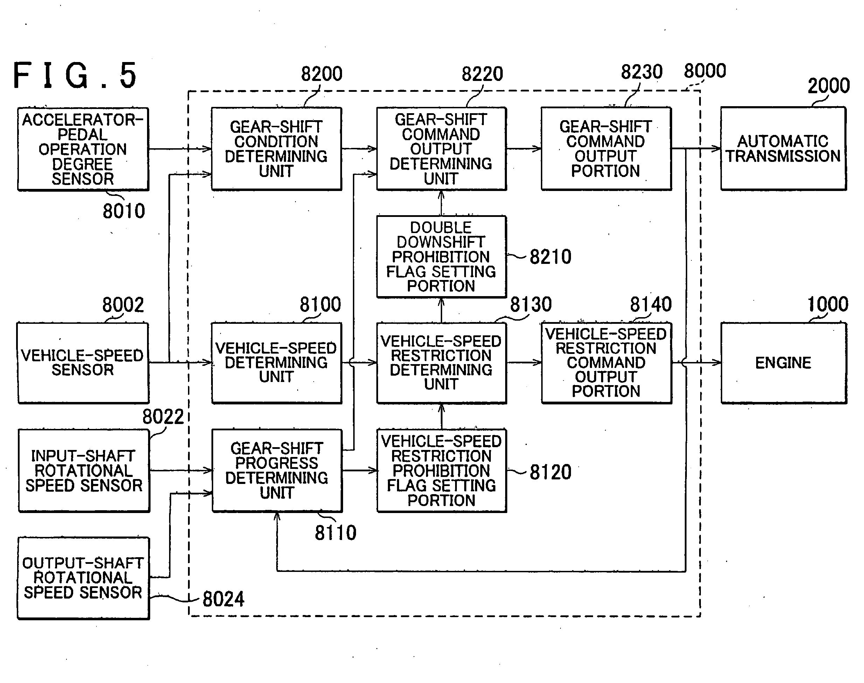

A diagram of function blocks of the control apparatus according to the embodiment will be described with reference to FIG. 5. As shown in FIG. 5, the control apparatus according to the embodiment includes a vehicle-speed determining unit 8100; a gear-shift progress determination portion 8110; a vehicle-speed restriction prohibition flag setting portion 8120, connected to the gear-shift progress determination portion 8110; a vehicle-speed restriction determination portion 8130, connected to the vehicle-speed determining unit 8100 and the vehicle-speed restriction prohibition flag setting portion 8120; and a vehicle-speed restriction command output portion 8140, connected to the vehicle-speed restriction determination portion 8130.

The vehicle-speed determining unit 8100 determines the vehicle speed V based on the signal from the vehicle-speed sensor 8002.

The gear-shift progress determining unit 8110 determines whether a downshift control for the automatic transmission 2000 is being executed, based on the signal from the input-shaft rotational speed sensor 8022, and the signal from the output-shaft rotational speed sensor 8024.

When the gear-shift progress determining unit 8110 determines that a downshift control is being executed, the vehicle-speed restriction prohibition flag setting portion 8120 sets (turns ON) a vehicle-speed restriction prohibition flag. The restriction of the vehicle speed is prohibited when the vehicle-speed restriction prohibition flag is set (ON).

The vehicle-speed restriction determining unit 8130 determines whether a vehicle-speed restriction control should be executed so that the vehicle speed V does not exceed a target limit speed, based on whether the vehicle-speed restriction prohibition flag is set. In the embodiment, the "vehicle-speed restriction control" signifies a control that decreases the output from the engine 1000 so that the vehicle speed V does not exceed the target limit speed.

The vehicle-speed restriction command output portion 8140 outputs a command to execute or prohibit the vehicle-speed restriction control to the engine 1000, based on the determination made by the vehicle-speed restriction determining unit 8130. If the engine 1000 receives the command to execute the vehicle-speed restriction control, the injector of the engine 1000 is controlled to decrease the fuel injection amount. Because the fuel injection amount is decreased, the output from the engine 1000 and the engine speed Ne decrease. Thus, the increase in the vehicle speed V is restricted.

Further, the control apparatus according to the embodiment includes a gear-shift condition determining unit 8200; a double downshift prohibition flag setting portion 8210, connected to the vehicle-speed restriction determining unit 8130; a gear-shift command output determining unit 8220, connected to the gear-shift condition determining unit 8200, the gear-shift progress determining unit 8110, and the double downshift prohibition flag setting portion 8210; and a gear-shift command output portion 8230, connected to the gear-shift command output determining unit 8220.

The gear-shift condition determining unit 8200 determines whether a condition for executing a downshift is satisfied, based on the signal from the accelerator-pedal operation degree sensor 8010, the signal from the vehicle-speed sensor 8002, and the shift diagram (refer to FIG. 2).

The double downshift prohibition flag setting portion 8210 sets (turns ON) a flag for prohibiting the automatic transmission 2000 from executing a subsequent downshift, based on the determination made by the vehicle-speed restriction determination portion 8130.

The gear-shift command output determination portion 8220 determines whether a gear shift should be executed, based on the determination made by the gear-shift condition determination portion 8200, the determination made by the gear-shift progress determination portion 8110, and the state of the double downshift prohibition flag.

The gear-shift command output portion 8230 outputs the gear-shift command to the engine 1000, based on the determination made by the gear-shift command output determination portion 8220.

In the embodiment, these function blocks may be implemented by CPU (Central Processing Unit) and memory that are included in the ECU 8000, and software that includes programs read from the memory, and executed by the CPU. The function blocks may also be implemented by hardware that includes a digital circuit or an analog circuit, instead of software. Generally the advantage to implementing the function blocks by hardware lies in the speed of operation, and the advantage to implementing the function blocks by software, lies in the flexibility of design. Hereinafter, the case where the control apparatus is implemented by software will be described. An aspect of the invention relates to a storage medium that stores such programs.

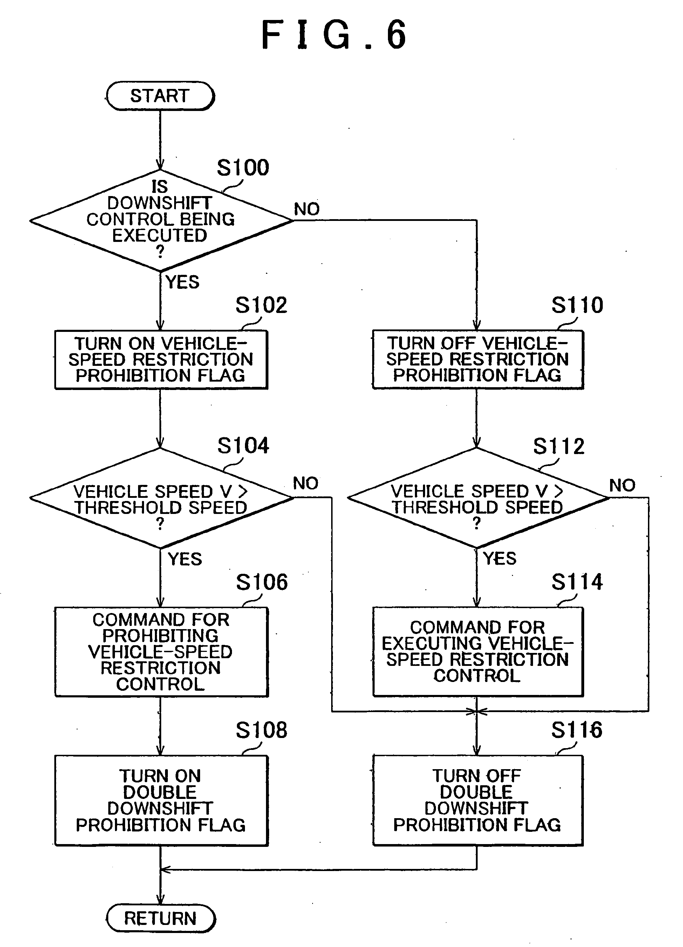

The control structure of the program that is executed by the ECU 8000 when the vehicle-speed restriction control is executed will be described with reference to FIG. 6. The ECU 8000 constitutes the control apparatus according to the embodiment. The program is executed at predetermined intervals.

In step S100, the ECU 8000 determines whether the downshift control for the automatic transmission 2000 is being executed, based on the input-shaft rotational speed NIN transmitted from the input-shaft rotational speed sensor 8022, and the output-shaft rotational speed NOUT transmitted from the output-shaft rotational speed sensor 8024.
The ECU 8000 determines whether the downshift control for the automatic transmission 2000 is being executed, for example, based on whether the input-shaft rotational speed NIN is synchronized with the synchronous rotational speed. If it is determined that the downshift control is being executed (YES in step S100), the routine proceeds to step S 102. If it is determined that the downshift control is not being executed (NO in step S 100), the routine proceeds to step S 110.

In step S102, the ECU 8000 sets (turns ON) the vehicle-speed restriction prohibition flag. In step S104, the ECU 8000 determines whether the vehicle speed V is higher than a threshold speed, based on the signal from the vehicle-speed sensor 8002.
The threshold speed is set in advance to be lower than the target limit speed by a predetermined value. If it is determined that the vehicle speed V is higher than the threshold speed (YES in step S104), the routine proceeds to step S106. If it is determined that the vehicle speed V is equal to or lower than the threshold speed (NO in step S 104), the routine proceeds to step S116.

In step S106, the ECU 8000 outputs the command to prohibit the vehicle-speed restriction control to the engine 1000. In step S108, the ECU 8000 sets (turns ON) the double downshift prohibition flag.

In step S110, the ECU 8000 resets (turns OFF) the vehicle-speed restriction prohibition flag. In step S112, the ECU 8000 determines whether the vehicle speed V is higher than the threshold speed, based on the signal from the vehicle-speed sensor 8002. The threshold speed is the same as the threshold speed employed in step S104. If it is determined that the vehicle speed V is higher than the threshold speed (YES in step S 112), the routine proceeds to step S114. If it is determined that the vehicle speed V is equal to or lower than the threshold speed (NO in step S 112), the routine proceeds to step S 116.

In step S114, the ECU 8000 outputs the command to execute the vehicle-speed restriction control to the engine 1000. In step S 116, the ECU 8000 resets (turns OFF) the double downshift prohibition flag.

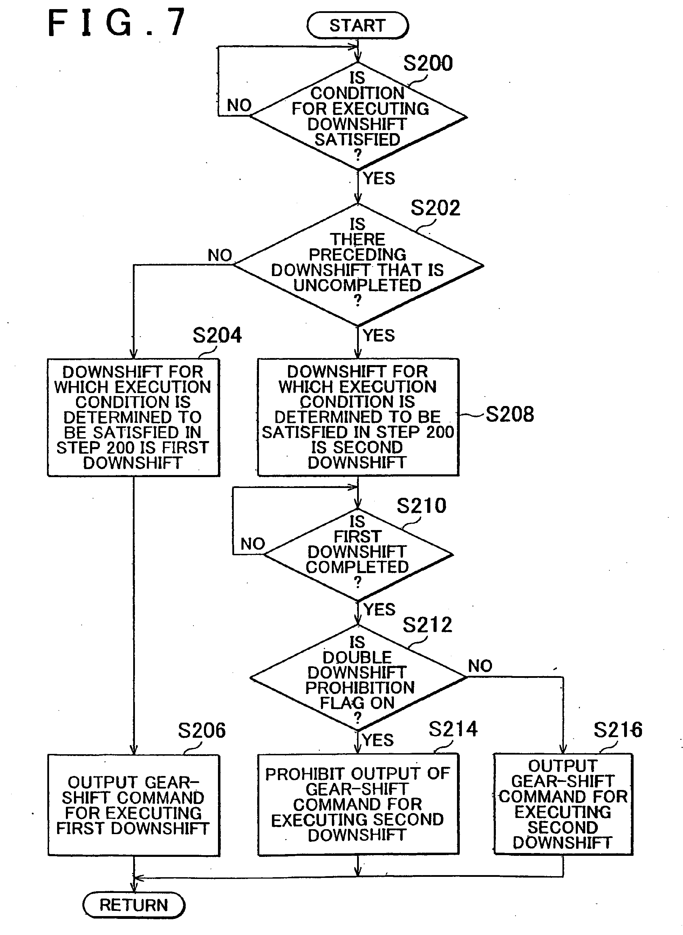

The control structure of a program executed by the ECU 8000 when a downshift is executed will be described with reference to FIG. 7. The program is executed in a predetermined cycle time, and repeated at predetermined intervals.

In step S200, the ECU 8000 determines whether the condition for executing a downshift is satisfied, based on the vehicle speed V transmitted from the vehicle-speed sensor 8002, the accelerator-pedal operation degree ACC transmitted from the accelerator-pedal operation degree sensor 8010, and the shift diagram. The ECU 8000 determines that the condition for executing the downshift is satisfied, for example, when a point calculated based on the vehicle speed V and the accelerator-pedal operation degree ACC moves from a higher-gear side to a lower-gear side, and crosses the shift line in the shift diagram shown in FIG. 2. If it is determined that the condition for executing the downshift is satisfied (YES in step S200), the routine proceeds to step S202. If it is determined that the condition for executing the downshift is not satisfied (NO in step S200), the routine returns to step S200.

In step S202, the ECU 8000 determines whether there is a preceding downshift that is uncompleted, based on the input-shaft rotational speed NIN transmitted from the input-shaft rotational sensor 8022, and the output-shaft rotational speed NOUT transmitted from the output-shaft rotational sensor 8024. The ECU 8000 determines that there is the preceding downshift that is uncompleted, for example, when the input-shaft rotational speed NIN is not synchronized with the synchronous rotational speed. If it is determined that there is the preceding downshift that is uncompleted (YES in step S202), the routine proceeds to step S208. If it is determined that there is the preceding downshift that is already completed (NO in step S202), the routine proceeds to step S204.

In step S204, the ECU 8000 determines that the downshift for which the execution condition is determined to be satisfied in step S200 is a first down shift. In step S206, the ECU 8000 outputs the gear-shift command to execute the first downshift to the automatic transmission 2000.

In step S208, the ECU 8000 determines that the downshift for which the execution condition is determined to be satisfied in step S200 is a second downshift, subsequent to the first downshift.

In step S210, the ECU 8000 determines whether the first downshift is completed, based on the input-shaft rotational speed NIN transmitted from the input-shaft rotational speed sensor 8022, and the output-shaft rotational speed NOUT transmitted from the output-shaft rotational speed sensor 8024. The ECU 8000 determines that the first downshift is completed, for example, when the input-shaft rotational speed NIN is synchronized with the synchronous rotational speed. If it is determined that the first downshift is completed (YES in step S210), the routine proceeds to step S212. If it is determined that the first downshift is not completed (NO in step S210), the routine returns to step S210.

In step S212, the ECU 8000 determines whether the double downshift prohibition flag is set (ON). If the double downshift prohibition flag is ON (YES in step S212), the routine proceeds to step S214. If the double downshift prohibition flag is OFF (NO in step S212), the routine proceeds to step S216.

In step S214, the ECU 8000 prohibits the output of the gear-shift command to execute the second downshift to the automatic transmission 2000.

In step S216, the ECU 8000 outputs the gear-shift command to the automatic transmission 2000 to execute the second downshift.

The operation of the automatic transmission controlled by the ECU 8000 based on the above-described structure and flowchart will be described. The ECU 8000 is the control apparatus according to the embodiment.

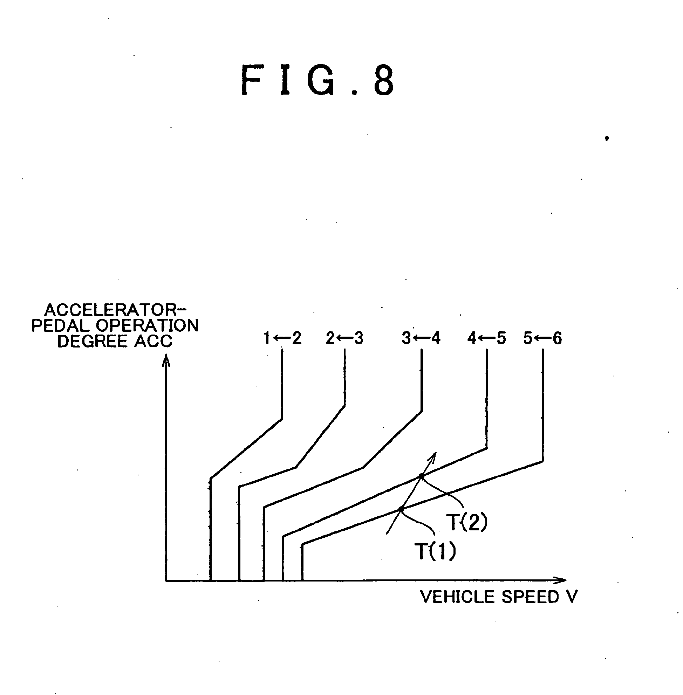

FIG. 8 shows the case where a vehicle is traveling in sixth gear, and a point calculated based on the vehicle speed V and the accelerator-pedal operation degree ACC crosses the shift line showing the downshift from the sixth gear to the fifth gear at time T (1), and crosses the shift line showing the downshift from the fifth gear to the fourth gear at time T (2).

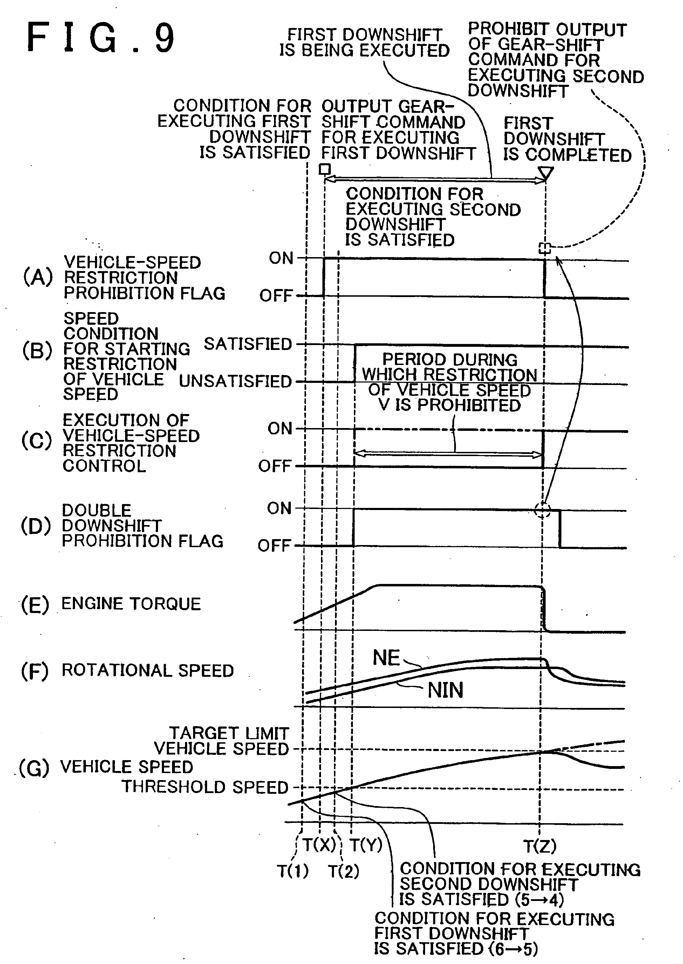

At time T (1), it is determined that the condition for executing the downshift from the sixth gear to the fifth gear is satisfied (S200). No downshift is being executed prior to the downshift from the sixth gear to the fifth gear at time T (1) (NO in step S202). Therefore, it is determined that the downshift from the sixth gear to the fifth gear is the first downshift (S204). Thus, the gear-shift command to execute the first downshift is output (S206). Then, when the first downshift is started at time T (X), the vehicle-speed restriction prohibition flag is turned ON (S102), as shown in FIG. 9 (A).

When the condition for executing the downshift from the fifth gear to the fourth gear is satisfied at time T (2), the first downshift is being executed (YES in step S202). Therefore, it is determined that the downshift from the fifth gear to the fourth gear is the second downshift that is subsequent to the first downshift (S208).

Then, when the vehicle speed V is higher than the threshold speed (YES in step S104) at time T (Y) as shown in FIG. 9 (G), the vehicle-speed restriction control (refer to the two-dot chain line in FIG. 9 (C)) is prohibited (S106) as shown in FIG. 9 (C), because the vehicle-speed restriction prohibition flag is ON (refer to FIG. 9 (A)). Thus, if the vehicle speed V is higher than the threshold speed (that is, when the speed condition for starting the restriction of the vehicle speed is satisfied (refer to FIG. 9 (B)), the engine torque (i.e., the output from the engine 1000) is not decreased, as shown in FIG. 9 (E). Therefore, the engine speed NE and the input-shaft rotational speed NIN increase, as shown in FIG. 9 (F). Thus, the input-shaft rotational speed NIN quickly approaches the synchronous speed. As a result, the first downshift is smoothly executed.

If the input-shaft rotational speed NIN increases, the vehicle speed V may exceed the threshold speed, and approach the target limit speed, as shown in FIG. 9 (G). If the second downshift is executed after the first downshift in this situation, the vehicle-speed restriction control continues to be prohibited. Therefore, the period during which the vehicle-speed restriction control is prohibited is excessively increased. As a result, the engine speed NE may further increase, and the vehicle speed V may exceed the target limit speed (refer to the one-dot chain line in FIG. 9 (G)).

Accordingly, as shown in FIG. 9 (D), the double downshift prohibition flag is turned ON (S108) at time T (Y) at which the vehicle-speed restriction control is prohibited. When the first downshift is completed (YES in step S210) at time T (Z), the second downshift is prohibited (S214), because the double downshift prohibition flag is ON (S212) as shown in FIG. 9 (D).

Thus, at time T (Z), the downshift is completed (NO in step S 100), the vehicle-speed restriction prohibition flag is turned OFF (S 110), and the vehicle-speed restriction control is executed (YES in step S 112, and S 114 is executed).

As a result, the engine torque starts to decrease at time T (Z), as shown in FIG. 9 (E). Thus, the engine speed NE starts to decrease, and the input-shaft rotational speed NIN and the vehicle speed V start to decrease due to the decrease in the engine speed NE. This prevents the vehicle speed V from exceeding the target limit speed.

Thus, when the vehicle speed is higher than the threshold speed, the control apparatus according to the embodiment executes the vehicle-speed restriction control to restrict the output from the engine so that the vehicle speed does not exceed the limit vehicle speed. However, when the vehicle speed exceeds the threshold speed during the downshift, the control apparatus prohibits the vehicle-speed restriction control, and prohibits the output of the gear-shift command to execute the subsequent downshift for which the execution condition is satisfied. Thus, the gear shift is smoothly executed.
Also, it is possible to prevent an excessive increase in the period during which the restriction of the vehicle speed is prohibited. Accordingly, the vehicle speed is prevented from exceeding the target limit speed.

According to the embodiment, the condition for executing the second downshift is satisfied during the period from when the condition for executing the first downshift is satisfied, until when the control for the first downshift is completed (S202). Therefore, for example, when the driver quickly depresses the accelerator pedal 8008, and accordingly the condition for executing the second downshift is satisfied before the control for the first downshift is started, the second downshift is prohibited.

Further, when the first downshift is completed (YES in step S210), it is determined whether the double downshift prohibition flag is ON (S212). Thus, for example, when the vehicle speed V exceeds the threshold speed, and therefore the restriction of the vehicle speed is prohibited after the condition for executing the second downshift is satisfied, the second downshift is prohibited.

## Claims

1. A control apparatus for a vehicle that includes a power source (1000) and an automatic transmission (2000) connected to an output shaft of the power source, the control apparatus comprises:
vehicle speed detection means (8100) for detecting a speed of the vehicle;
vehicle-speed restriction means (8130, 8140) for executing a vehicle-speed restriction control in the power source to restrict the speed of the vehicle;
downshift-execution condition determining means (8200) for determining whether a condition for executing a downshift of the automatic transmission is satisfied;
downshift-progress determining means (8110) for determining the progress of the downshift;
restriction prohibition means (8120, 8130, 8140) for prohibiting the vehicle-speed restriction means from executing the vehicle-speed restriction control if a predetermined condition relating to the speed of the vehicle is satisfied during the downshift; and
gear-shift prohibition means (8210, 8220, 8230) for prohibiting a second downshift from being executed after a first downshift if the restriction prohibition means prohibits the vehicle-speed restriction means from executing the vehicle speed restriction control.

2. The control apparatus for the vehicle according to claim 1, wherein the gear-shift prohibition means (8210, 8220, 8230) prohibits execution of the second downshift after the first downshift if a condition for executing the second downshift is satisfied during a period from when a condition for executing the first downshift is satisfied, until when the first downshift is completed.

3. The control apparatus for a vehicle according to claim 1 or 2, wherein the gear-shift prohibition means (8210, 8220, 8230) prohibits execution of the second downshift after the first downshift if the vehicle-speed restriction means is prohibited from executing the vehicle speed restriction control by the restriction prohibition means when the first downshift is completed (T(Z)).

4. A method of controlling a vehicle that includes a power source and an automatic transmission connected to an output shaft of the power source, the method comprises:
detecting a speed of the vehicle (S104);
executing a vehicle speed-restriction control in the power source to restrict a speed of the vehicle (S114);
determining whether a condition for executing a downshift of the automatic transmission is satisfied (S200);
determining progress of the downshift (S202);
prohibiting execution of the vehicle speed-restriction control by the vehicle-speed restriction step, if a predetermined condition relating to a speed is satisfied during the downshift (S106); and
prohibiting execution of a second downshift after a first downshift when execution of the vehicle-speed restriction control is prohibited (S108).

5. The method of controlling the vehicle according to claim 4, wherein execution of the second downshift after the first downshift is prohibited if a condition for executing the second downshift is satisfied during a period from when a condition for executing the first downshift is satisfied, until when the first downshift is completed.

6. The method of controlling the vehicle according to claim 4 or 5, wherein execution of the second downshift after the first downshift is prohibited if execution of the vehicle spewed restriction control is being prohibited at the completion of the first downshift (T(Z)).

7. A program that makes a computer execute the method according to any one of claims 4 to 6.

8. A storage medium comprising a program according to claim 7.

## Patentansprüche

1. Eine Steuervorrichtung für ein Fahrzeug mit einer Antriebsquelle (1000) und einem Automatikgetriebe (2000), das mit einer Ausgangswelle der Antriebsquelle verbunden ist, wobei die Steuervorrichtung aufweist:
Fahrzeuggeschwindigkeitserkennungsmittel (8100) zur Erkennung einer Geschwindigkeit des Fahrzeugs;
Fahrzeuggeschwindigkeitsbegrenzungsmittel (8130, 8140) zur Durchführung einer Fahrzeuggeschwindigkeitsbegrenzungssteuerung in der Antriebsquelle, um die Geschwindigkeit des Fahrzeugs zu begrenzen;
Herunterschaltdurchführungsbedingungsbestimmungsmittel (8200) zur Bestimmung, ob eine Bedingung zur Durchführung eines Herunterschaltens des Automatikgetriebes erfüllt ist;
Herunterschaltfortschrittbestimmungsmittel (8110) zur Bestimmung des Fortschritts des Herunterschaltens;
Begrenzungsverhinderungsmittel (8120, 8130, 8140) zum daran Hindern der Fahrzeuggeschwindigkeitsbegrenzungsmittel, die Fahrzeuggeschwindigkeitsbegrenzungssteuerung durchzuführen, wenn eine bestimmte Bedingung betreffend die Geschwindigkeit des Fahrzeugs während des Herunterschaltens erfüllt ist; und
Gangschaltverhinderungsmittel (8210, 8220, 8230) zum Verhindern der Durchführung eines zweiten Herunterschaltens nach einem ersten Herunterschalten, wenn die Begrenzungsverhinderungsmittel die Fahrzeuggeschwindigkeitsbegrenzungsmittel daran hindern, die Fahrzeuggeschwindigkeitsbegrenzungssteuerung durchzuführen.

2. Die Steuervorrichtung für das Fahrzeug nach Anspruch 1, wobei die Gangschaltverhinderungsmittel (8210, 8220, 8230) die Durchführung des zweiten Herunterschaltens nach dem ersten Herunterschalten verhindern, wenn eine Bedingung zur Durchführung des zweiten Herunterschaltens während einer Zeit erfüllt ist, ausgehend, wenn eine Bedingung zur Durchführung des ersten Herunterschaltens erfüllt ist bis dahin, wo das erste Herunterschalten abgeschlossen ist.

3. Die Steuervorrichtung für ein Fahrzeug nach Anspruch 1 oder 2, wobei die Gangschaltverhinderungsmittel (8210, 8220, 8230) die Durchführung des zweiten Herunterschaltens nach dem ersten Herunterschalten verhindern, wenn die Fahrzeuggeschwindigkeitsbegrenzungsmittel an einer Durchführung der Fahrzeuggeschwindigkeitsbegrenzungssteuerung durch die Begrenzungsverhinderungsmittel gehindert sind, wenn das erste Herunterschalten abgeschlossen ist (T(Z)).

4. Ein Verfahren zur Steuerung eines Fahrzeugs, welches eine Antriebsquelle und ein Automatikgetriebe aufweist, das mit einer Ausgangswelle der Antriebsquelle verbunden ist, wobei das Verfahren aufweist:
Erkennen einer Geschwindigkeit des Fahrzeugs (S104);
Durchführen einer Fahrzeuggeschwindigkeitsbegrenzungssteuerung in der Antriebsquelle, um eine Geschwindigkeit des Fahrzeugs zu begrenzen (S114);
Bestimmen, ob eine Bedingung zur Durchführung eines Herunterschaltens des Automatikgetriebes erfüllt ist (S200);
Bestimmen eines Fortschritts des Herunterschaltens (S202);
Verhindern der Durchführung der Fahrzeuggeschwindigkeitsbegrenzungssteuerung durch den Fahrzeuggeschwindigkeitsbegrenzungsschritt, wenn eine bestimmte Bedingung betreffend eine Geschwindigkeit während des Herunterschaltens erfüllt ist (S106); und
Verhindern der Durchführung eines zweiten Herunterschaltens nach einem ersten Herunterschalten, wenn die Durchführung der Fahrzeuggeschwindigkeitsbegrenzungssteuerung verhindert ist (S108).

5. Das Verfahren zur Steuerung des Fahrzeugs nach Anspruch 4, wobei die Durchführung des zweiten Herunterschaltens nach dem ersten Herunterschalten verhindert ist, wenn eine Bedingung zur Durchführung des zweiten Herunterschaltens während einer Periode erfüllt ist, ausgehend, wenn eine Bedingung zur Durchführung des ersten Herunterschaltens erfüllt ist, bis dahin, wenn das erste Herunterschalten abgeschlossen ist.

6. Das Verfahren zur Steuerung des Fahrzeugs nach Anspruch 4 oder 5, wobei die Durchführung des zweiten Herunterschaltens nach dem ersten Herunterschalten verhindert ist, wenn die Durchführung der Fahrzeuggeschwindigkeitsbegrenzungssteuerung bei Abschluss des ersten Herunterschaltens (T(Z)) verhindert ist.

7. Ein Programm, welches einen Computer veranlasst, das Verfahren nach einem der Ansprüche 4 bis 6 durchzuführen.

8. Ein Speichermedium, aufweisend ein Programm nach Anspruch 7.

## Revendications

1. Appareil de commande pour un véhicule qui inclut une source de puissance (1000) et une transmission automatique (2000) raccordée à un arbre de sortie de la source de puissance, l'appareil de commande comprend:
un moyen (8100) de détection de la vitesse du véhicule pour détecter la vitesse du véhicule;
un moyen (8130, 8140) de limitation de la vitesse du véhicule pour exécuter une commande de limitation de la vitesse du véhicule dans la source de puissance afin de limiter la vitesse du véhicule;
un moyen (8200) de détermination de la condition d'exécution d'une rétrogradation pour déterminer si une condition d'exécution d'une rétrogradation de la transmission automatique est satisfaite;
un moyen (8110) de détermination de la progression d'une rétrogradation pour déterminer la progression de la rétrogradation;
un moyen (8120, 8130, 8140) empêchant la limitation pour empêcher que le moyen de limitation de la vitesse du véhicule n'exécute la commande de limitation de la vitesse du véhicule si une condition prédéterminée se rapportant à la vitesse du véhicule est satisfaite durant la rétrogradation; et
un moyen (8210, 8220, 8230) empêchant le changement de vitesse pour empêcher l'exécution d'une deuxième rétrogradation après une première rétrogradation si le moyen empêchant la limitation empêche le moyen de limitation de la vitesse du véhicule d'exécuter la commande de limitation de la vitesse du véhicule.

2. Appareil de commande pour le véhicule selon la revendication 1, dans lequel le moyen (8210, 8220, 8230) empêchant le changement de vitesse empêche l'exécution de la deuxième rétrogradation après la première rétrogradation si une condition d'exécution de la deuxième rétrogradation est satisfaite durant une période qui s'étale de l'instant où une condition d'exécution de la première rétrogradation est satisfaite, jusqu'à l'achèvement de la première rétrogradation.

3. Appareil de commande pour un véhicule selon la revendication 1 ou 2, dans lequel le moyen (8210, 8220, 8230) empêchant le changement de vitesse empêche l'exécution de la deuxième rétrogradation après la première rétrogradation si l'on empêche le moyen de limitation de la vitesse du véhicule d'exécuter la commande de limitation de la vitesse du véhicule par le moyen empêchant la limitation lorsque la première rétrogradation est achevée (T(Z)).

4. Procédé de commande d'un véhicule qui inclut une source de puissance et une transmission automatique raccordée à un arbre de sortie de la source de puissance, le procédé comprend le fait de:
détecter une vitesse du véhicule (S 104);
exécuter une commande de limitation de la vitesse du véhicule dans la source de puissance pour limiter la vitesse du véhicule (S 114);
déterminer si une condition pour exécuter une rétrogradation de la transmission automatique est satisfaite (S200);
déterminer la progression de la rétrogradation (S202);
empêcher l'exécution de la commande de limitation de la vitesse du véhicule par l'étape de limitation de la vitesse du véhicule, si une condition prédéterminée se rapportant à une vitesse est satisfaite durant la rétrogradation (S 106); et
empêcher l'exécution d'une deuxième rétrogradation après une première rétrogradation lorsque l'on empêche l'exécution de la commande de limitation de la vitesse du véhicule (S108).

5. Procédé de commande du véhicule selon la revendication 4, dans lequel l'on empêche l'exécution de la deuxième rétrogradation après la première rétrogradation si une condition d'exécution de la deuxième rétrogradation est satisfaite durant une période qui s'étale de l'instant où une condition d'exécution de la première rétrogradation est satisfaite, jusqu'à l'achèvement de la première rétrogradation.

6. Procédé de commande du véhicule selon la revendication 4 ou 5, dans lequel l'on empêche l'exécution de la deuxième rétrogradation après la première rétrogradation si l'on empêche l'exécution de la commande de limitation de la vitesse du véhicule au moment de l'achèvement de la première rétrogradation (T(Z)).

7. Programme qui amène un ordinateur à exécuter le procédé selon l'une quelconque des revendications 4 à 6.

8. Support de stockage comprenant un programme selon la revendication 7.
